# DEMANDE DE BREVET EUROPEEN

(11) **EP 4 287 501 A1**
(43) Date de publication de la demande: **06.12.2023**
(21) Numéro de dépôt: 23175973.9
(22) Date de dépôt: 30.05.2023
(51) Int. Cl.: H02S 20/20

(54) **DISPOSITIF PHOTOVOLTAÏQUE COMPORTANT DES ATTACHES**

(30) Priorité: 02.06.2022 FR 2205334
(71) Demandeur: Commissariat à l'énergie atomique et aux énergies alternatives, 75015 Paris (FR)
(72) Inventeur: DOUCET, Olivier, 38054 GRENOBLE CEDEX 09 (FR)
(74) Mandataire: Cabinet Nony

(57) **Abrégé**

Dispositif photovoltaïque (1), comportant :
- un ou plusieurs modules photovoltaïques (2), comportant chacun une première face et une deuxième face entourant un encapsulant de cellules photovoltaïques, et
- une pluralité d'attaches (5) pour fixer au moins un module photovoltaïque (2) à un support (10), les attaches (5) étant réparties le long d'au moins un bord dudit module photovoltaïque, voire le long d'au moins deux bords opposés dudit module photovoltaïque (2).

## Description

### Domaine technique

La présente invention concerne la fixation et le maintien de modules photovoltaïques sur un support.

### Technique antérieure

Il est connu de munir les modules photovoltaïques de cadres en aluminium conçus pour permettre leur fixation à une structure porteuse. Le cadre en aluminium et la structure porteuse représentent un impact environnemental notable.

En effet, les structures porteuses des modules photovoltaïques sont souvent formées avec des structures métalliques de large section ancrées dans le sol avec des plots de béton. Ces structures porteuses peuvent être en acier zingué et représentent ainsi un fort impact environnemental par la grande quantité d'acier et de béton utilisée.

Par ailleurs la rigidité des modules photovoltaïques est obtenue par des cadres en aluminium ou des biverres épais. En effet, les points d'accroche étant ponctuels, ils amènent donc des contraintes localisées. Ces cadres en aluminium ont aussi un impact environnemental fort.

Or, il est nécessaire de dimensionner le module photovoltaïque et la structure porteuse afin de résister aux efforts des contraintes extérieures telles que la neige et le vent, ainsi que les contraintes sismiques. Ces efforts sont localisés au niveau des points de fixations du cadre du module photovoltaïque à la structure porteuse, qui peut notamment être faite par des pinces communément appelés clamps.

Il a été envisagé de remplacer les structures porteuses par des câbles. En effet le câble permet des efforts en traction bien supérieur pour une masse de matériaux bien plus faible.

On connaît par exemple par les modèles d'utilité CN 207884529 U, CN 205509929 U, CN207098999 U de tels moyens de fixation par des câbles passant sous le module et attaché au cadre du module ou ponctuellement au niveau du module, sous le module.

Les efforts lors de la déformation du module sont donc ponctuels au niveau des points d'accroche. Les contraintes sont donc importantes, ce qui impose l'utilisation de cadres ou de biverre épais qui ont un impact environnemental notable.

Il existe donc un besoin pour diminuer l'impact environnemental des modules photovoltaïques et augmenter leur modularité.

La présente invention vise à répondre à ce besoin.

### Résumé de l'invention

L'invention a ainsi pour objet, selon l'un de ses aspects, un dispositif photovoltaïque, comportant:
- un ou plusieurs modules photovoltaïques, comportant chacun une première face et une deuxième face entourant un encapsulant de cellules photovoltaïques, et
- une pluralité d'attaches pour fixer au moins un module photovoltaïque à un support, les attaches étant réparties le long d'au moins un bord dudit module photovoltaïque, voire le long d'au moins deux bords opposés dudit module photovoltaïque.

L'invention a notamment pour objet un dispositif photovoltaïque, comportant :
- un ou plusieurs modules photovoltaïques, comportant chacun une première face et une deuxième face entourant un encapsulant de cellules photovoltaïques, et
- une pluralité d'attaches pour fixer au moins un module photovoltaïque à un support, les attaches étant réparties le long d'au moins un bord dudit module photovoltaïque, voire le long d'au moins deux bords opposés dudit module photovoltaïque,
les attaches étant fixées le long d'au moins un bord de la première face et/ou de la deuxième face du module photovoltaïque par collage.

Grâce à l'invention, les efforts sont mieux répartis sur le pourtour du module photovoltaïque, notamment sur un bord ou plusieurs bords de celui-ci, par exemple sur deux bords de celui-ci ou sur l'ensemble de son pourtour. Les contraintes dans le module photovoltaïque sont ainsi moins importantes.

Le module photovoltaïque en tant que tel comporte des cellules photovoltaïques disposées entre une face avant et une face arrière, et qui sont reliées électriquement entre elles par des conducteurs de liaison et immergées entre deux couches avant et arrière de matériau d'encapsulation formant toutes les deux l'encapsulant. On peut définir des bords du module photovoltaïque, qui définissent son pourtour, étant formés par les bords des première et deuxième faces et de l'encapsulant. On peut définir deux bords opposés, le module photovoltaïque pouvant avoir une forme générale rectangulaire. Les bords peuvent avoir une certaine épaisseur, du fait de la présence des cellules photovoltaïques dans l'encapsulant, de sort qu'on peut définir des arêtes des bords au niveau des arrêtes supérieure et inférieures.

Le support peut être installé sur une surface quelconque, y compris une surface non plane. L'invention peut être tout particulièrement utile pour l'installation du support sur une surface accidentée, nécessitant par exemple des portées importantes ou des déclinaisons importantes.

Par ailleurs, l'invention permet la déformation du ou des modules photovoltaïques, et permet notamment de favoriser leur déformation de façon homogène. Les courbures de la déformation peuvent être importantes, notamment bien plus importantes que les déformations subies par les modules photovoltaïques fixés sur un cadre. Cela peut permettre par exemple de réaliser des modules photovoltaïques avec une première face et/ou une deuxième face et/ou un encapsulant d'épaisseur plus faible.

Le ou les modules photovoltaïques peuvent être dépourvus de cadre, notamment dépourvus de cadre en aluminium.

### Exposé de l'invention

Dans un mode de réalisation, les attaches peuvent être fixées le long d'au moins un bord de la première face et/ou de la deuxième face du module photovoltaïque par collage.

Le module photovoltaïque peut être avantageusement attaché ou fixé au support uniquement, notamment par l'intermédiaire des attaches. Dans un mode de réalisation, il n'est pas fixé à un autre élément tel qu'un textile ou autre.

Dans un mode de réalisation, les attaches peuvent être réparties le long d'un bord unique du module photovoltaïque, ce qui peut être utile dans le cas où le module photovoltaïque est destiné à être utilisé en position verticale, sa partie basse pouvant par exemple être mobile.

Dans un autre mode de réalisation, les attaches peuvent être réparties le long d'au moins deux bords opposés dudit module photovoltaïque.

Les attaches peuvent être réparties de façon homogène le long d'au moins un bord du module photovoltaïque, notamment d'au moins deux bords opposés dudit module photovoltaïque. Par `réparties de façon homogène', il faut comprendre que les attaches sont écartées d'une distance d les unes des autres qui est sensiblement toujours la même pour deux attaches consécutives.

Dans un mode de réalisation, les attaches peuvent être réparties de façon homogène le long d'un bord unique du module photovoltaïque, ce qui peut être utile dans le cas où le module photovoltaïque est destiné à être utilisé en position verticale, sa partie basse pouvant par exemple être mobile.

Dans un autre mode de réalisation, les attaches peuvent être réparties de façon homogène le long d'au moins deux bords opposés dudit module photovoltaïque.

Pour un bord de module photovoltaïque donné, la distance d peut varier de moins de 30% autour d'une valeur centrale, de préférence de moins de 20% autour d'une valeur centrale, mieux de moins de 10% autour d'une valeur centrale, et encore plus avantageusement de moins de 5% autour d'une valeur centrale.

En variante, les attaches peuvent être réparties de façon non homogène le long d'au moins un bord du module photovoltaïque, notamment d'au moins deux bords opposés dudit module photovoltaïque. Dans un mode de réalisation, certaines zones du bord du module photovoltaïque peuvent être dépourvues d'attaches, comme notamment les zones de passage de câbles électriques ou les coins. Dans un autre mode de réalisation, on peut avoir une répartition non homogène des attaches, avec celles-ci réparties sur tout le bord du module photovoltaïque. Dans ce cas, les attaches sont écartées d'une distance d qui peut être variable.

Les attaches peuvent par exemple être écartées les unes des autres d'une distance d comprise entre 0,5 et 20 cm, mieux entre 1 et 15 cm, voire entre 1,5 et 10 cm, étant par exemple de quelques cm.

Par exemple avec une contrainte de la neige de l'ordre de 5400 Pa et un module photovoltaïque de dimensions 1 m × 2 m dont les attaches sont mises sur la grande longueur du module (200 cm), la force appliquée sur le module photovoltaïque est de l'ordre de 10800 N. Si l'attache résiste à une force d'environ 55 N, alors le nombre minimal d'attaches à utiliser sur un bord est de 10800/55=196 attaches soit une attache tous les centimètres environ.

La pluralité d'attaches peut appartenir à un unique fil de maintien ou à une pluralité de fils de maintien.

Le ou les fils de maintien utilisé(s) pour former une ou des attaches peuvent être disposé(s) sur un ou des bords du module photovoltaïque, notamment au moins un bord de la première face et/ou de la deuxième face du module photovoltaïque.

Un bord du module photovoltaïque peut comporter un seul fil de maintien, lequel est utilisé pour former toutes les attaches, notamment en formant des boucles.

En variante, un bord du module photovoltaïque peut comporter une pluralité de fils de maintien, lesquels forment chacun une ou des attaches.

Le nombre de fils de maintien et d'attaches pour un bord peut dépendre des contraintes mécaniques subies par le dispositif et du diamètre des fils utilisés.

Un diamètre d'un fil de maintien peut être supérieur ou égal à 0,15 mm, mieux supérieur ou égal à 0,6 mm, voire supérieur ou égal à 1 mm, étant par exemple de 1 mm, voire encore supérieur ou égale à 2 mm.

Comme la contrainte est bien répartie du fait des nombreuses attaches, chaque attache a à supporter une contrainte plus faible, ce qui permet d'utiliser des attaches formées par un ou des fils de maintien fins compatibles avec l'épaisseurs de l'encapsulant, qui peut être typiquement de l'ordre de 0,6 mm.

Le ou les fils de maintien peuvent être réalisés dans un matériau choisi dans la liste suivante, qui n'est pas limitative : acier, matière plastique, polymère, fibres polymères de haute résistance, par exemple fibres d'aramides poly(p-phénylènetéréphtalamide (nom commercial Kevlar^{®}) ou polyéthylène de masse molaire très élevée (UHMPE) (nom commercial Dyneema^{®}).

Le ou les fils de maintien peuvent comporter une gaine, qui permet avantageusement de protéger les fibres polymères utilisées du rayonnement ultraviolet, ce qui permet d'améliorer la durée de vie du dispositif photovoltaïque.

Un module photovoltaïque peut comporter un encapsulant réalisé dans un ou des matériaux choisis dans la liste suivante, qui n'est pas limitative : matière plastique, polymère, EVA. L'encapsulant peut entourer entièrement les cellules photovoltaïques. L'encapsulant peut être formé à partir de deux films disposés de part et d'autres des cellules photovoltaïques, l'ensemble étant ensuite laminé, de sorte que les deux films fusionnent pour former un ensemble encapsulant venant enrober les cellules photovoltaïques.

L'ensemble encapsulant peut être formé par au moins un film avant et un film arrière comportant au moins un matériau d'encapsulation de type polymère choisi parmi : les copolymères d'acides, les ionomères, le poly(éthylène-acétate de vinyle) (EVA), les acétals de vinyle, tels que les polyvinylbutyrals (PVB), les polyuréthanes, les polyéthylènes, tels que les polyéthylènes linéaires basse densité, les polyoléfines élastomères de copolymères, les copolymères d'α-oléfines et des α-, β- esters d'acide carboxylique à éthylénique, tels que les copolymères éthylène-acrylate de méthyle et les copolymères éthylène-acrylate de butyle, les élastomères de silicone et/ou les élastomères à base de polyoléfine thermoplastique réticulée.

Par le terme « encapsulant » ou « encapsulé », il faut comprendre que la pluralité de cellules photovoltaïques est disposée dans un volume, par exemple hermétiquement clos vis-à-vis des liquides et des gaz, au moins en partie formé par au moins deux films de matériau(x) d'encapsulation, réunies entre eux après lamination pour former l'ensemble encapsulant.

En effet, initialement, c'est-à-dire avant toute opération de lamination, l'ensemble encapsulant est constitué par au moins deux films de matériau(x) d'encapsulation, entre lesquels la pluralité de cellules photovoltaïques est encapsulée.

Toutefois, pendant l'opération de lamination des films, les films de matériau d'encapsulation fondent pour ne former, après l'opération de lamination, qu'un seul ensemble solidifié dans lequel sont noyées les cellules photovoltaïques.

Un module photovoltaïque peut comporter une première face formant par exemple la face avant et réalisée dans un ou des matériaux transparents choisi dans la liste suivante, qui n'est pas limitative : verre, matériau composite, matière plastique, polymère. Un module photovoltaïque peut comporter une deuxième face formant la face arrière et réalisée dans un ou des matériaux choisis dans la liste suivante, qui n'est pas limitative : verre, matériau composite, matière plastique, polymère, métaux.

Dans le cas où les première et deuxième faces sont réalisées en verre, on parle de module biverre. L'utilisation de biverres est particulièrement avantageuse dans le cas de l'agrivoltaïsme, car le verre est plus résistant aux agressions par les produits de traitement agricoles. Le dispositif photovoltaïque peut avoir avantageusement un ou des biverres avec des verres plus minces et dépourvu de cadre en aluminium.

Une épaisseur de la première face et/ou de la deuxième face peut être inférieure à 3 mm, mieux inférieure ou égal à 2 mm, voire inférieure ou égale à 1 mm. Cette épaisseur peut être notamment choisie quand les première et/ou deuxième face sont réalisées en verre.

Une épaisseur de l'encapsulant peut être supérieure à 0,3 mm, mieux supérieure à 0,6 mm, voire supérieure à 1,2 mm. Une épaisseur suffisante de l'encapsulant peut notamment être utile lorsque le ou les fils d'attache sont fixés dans l'encapsulant.

Les attaches peuvent être fixées dans l'encapsulant et/ou sur la première face et/ou sur la deuxième face.

Les attaches peuvent être fixées dans l'encapsulant, notamment entre les deux films de celui-ci avant lamination. Ainsi, les attaches sont enrobées dans l'encapsulant, étant solidarisées avec celui-ci. Dans ce cas, le matériau utilisé pour le ou les fils de maintien est avantageusement compatible avec la température de lamination, ce qui incite à privilégier les fils de maintien en acier car les températures classiquement utilisées pour la lamination, de l'ordre de 150 à 170°C, sont incompatibles avec des fibres polymères.

Dans le cas d'une lamination des fils de maintien avec le module photovoltaïque et lorsque celui-ci comporte des première et deuxième faces réalisées en matières rigides telles que le verre, le diamètre du ou des fils de maintien est avantageusement inférieur à l'espace libre d'encapsulant, notamment entre les deux surfaces rigides, soit entre 0,5 et 1,2 mm environ.

Dans le cas où le module photovoltaïque comporte une première face en verre et une deuxième face en polymère, par exemple, le diamètre du ou des fils de maintien peut être plus important.

Lorsque le ou les fils de maintien sont conducteurs et sont fixés dans l'encapsulant, les distances entre les éléments conducteurs internes du module, cellules photovoltaïques et rubans, et le ou les fils de maintien doivent respecter des distances d'isolation électrique suffisantes.

En variante ou additionnellement, les attaches peuvent être fixées sur la première face et/ou sur la deuxième face, notamment après la lamination.

Dans un mode de réalisation, les attaches d'un même bord d'un module photovoltaïque peuvent être fixées sur la première face, et les attaches d'un deuxième bord opposé du module photovoltaïque peuvent être fixées sur la deuxième face du module photovoltaïque. Une telle configuration peut permettre de s'adapter à l'angle d'inclinaison du module photovoltaïque sur son support.

Les attaches peuvent être fixées sur la première face et/ou sur la deuxième face d'un module photovoltaïque, notamment par collage.

La colle utilisée peut être choisie dans la liste suivante, qui n'est pas limitative : colle époxy, mousse ou colle acrylique, colle polyuréthane, colle silicone. La colle est de préférence choisie afin que sa tenue mécanique soit suffisante pour maintenir les attaches sur le module photovoltaïque.

La colle utilisée peut avoir une fluidité suffisante afin de permettre sa pénétration dans le fil de maintien et de bien boucher les pores de celui-ci, ce qui permet d'éviter de possibles entrées d'humidité dans le fil de maintien et donc dans le module photovoltaïque.

Par ailleurs, la fluidité de la colle doit être choisie de manière à éviter que la colle ne remonte par capillarité dans les fils de maintien en dehors du module photovoltaïque, ce qui risque de diminuer sa capacité de collage sur le module photovoltaïque et modifier ses caractéristiques mécaniques. Afin de contrer un tel phénomène, on peut placer en préalable un point de colle fluide à quelques millimètres du bord du module photovoltaïque afin que la capillarité du fil de maintien soit stoppée.

Afin de renforcer le collage, on peut utiliser une pièce de renfort. A cet effet, le dispositif photovoltaïque peut comporter une pièce de renfort disposée perpendiculairement sur les attaches au niveau des points de collage sur le module photovoltaïque. La pièce de renfort peut être souple ou rigide. La pièce de renfort peut comporter un fil, une tige, une bande de renfort, un tissu, cette liste n'étant pas limitative, et être collée sur les attaches. La pièce de renfort permet de répartir les contraintes et donner plus de résistance au collage et de renforcer la colle.

En variante ou additionnellement, le dispositif photovoltaïque peut comporter une bande ou couche de protection, disposés sur les attaches au niveau des points de collage sur le module photovoltaïque. Cette bande ou couche de protection permet en outre de protéger la colle du rayonnement ultraviolet.

Lorsque les attaches sont conductrices et sont fixées à l'extérieur sur la première et/ou seconde face, les épaisseurs de matériaux et leur caractéristique diélectrique doivent être suffisantes pour maintenir l'isolation électrique avec les conducteurs et cellules sous-jacents.

Après la lamination de l'encapsulant, on peut ajouter de la résine ou de la colle, notamment fluide, afin de combler d'éventuels pores autour des fils de maintien. Cela permet d'éviter toute propagation de l'humidité au sein du module photovoltaïque.

La ou les attaches d'un bord de module photovoltaïque peuvent être droites et s'étendre sensiblement parallèlement les unes aux autres.

En variante, elles peuvent être disposées en formant des boucles.

Le fil de maintien d'un même bord d'un module photovoltaïque peut être continu ou non.

Le bord ou les deux bords opposés du ou des modules photovoltaïques peuvent comporter au moins une arête arrondie, par exemple par polissage, ou une arête abattue ou un bord rodé. Une telle arête arrondie permet d'éviter tout endommagement des attaches, qui peuvent entrer en contact avec ladite arête.

La pièce de renfort peut comporter également ou additionnellement une arête arrondie, par exemple par polissage, ou une arête abattue ou un bord rodé.

En variante ou additionnellement, le dispositif photovoltaïque peut comporter une pièce de liaison entre le module photovoltaïque et la pluralité d'attaches. Dans ce cas, la pièce de liaison est solidaire du module photovoltaïque et les attaches sont fixées à la pièce de liaison.

Le dispositif photovoltaïque peut comporter une ou des calles disposées entre le ou les modules photovoltaïques et le support pour empêcher leur rapprochement. En effet, notamment lors des mouvements d'ondulations des câbles, le câble peut être amené à toucher le verre du ou des modules photovoltaïques et à risquer de l'endommager.

L'invention a encore pour objet, indépendamment ou en combinaison avec ce qui précède, un ensemble comportant un dispositif photovoltaïque tel que défini plus haut, et un support auquel sont rattachés les modules photovoltaïques.

Le ou les modules photovoltaïques peuvent être attachés au support avec un écartement non nul. L'écartement entre le support et un module photovoltaïque peut être supérieur à 1 mm, mieux supérieur à 20 mm, voire supérieur à 30 mm. Un tel écartement est occupé par les attaches s'étendant entre le ou les modules photovoltaïques et le support.

Les attaches peuvent être fixées au support selon différent moyens, tels que par exemple noeuds, noeuds en tête d'alouette avec dispositif d'accroche tel qu'une barre, boucle dans lesquelles passe au moins une partie du support, utilisation d'une pièce de jonction entre l'attache et le support, telle que par exemple un crochet ou un autre fil de jonction, cette liste n'étant pas limitative.

Le support peut être flexible. Le support peut comporter par exemple un ou des câbles, ou des cordes, un ou des filets, toiles, cette liste n'étant pas limitative. Dans un mode de réalisation, le support peut comporter des câbles, notamment deux câbles parallèles l'un à l'autre, par exemple des câbles passant sur les côtés du ou des modules photovoltaïques.

Le support peut par exemple comporter des câbles, notamment dans des applications telles que par exemple des talus de routes ou de canaux, en encore en montagne. Avec des câbles, les possibilités de fixation sont beaucoup plus grandes, y compris sur un sol en pente ou un sol bosselé. Au contraire, avec un support comportant des structures métalliques rigides, les angles entre les poteaux et les pannes de supportage sont définit, de sorte qu'il faut que le sol soit relativement plan.

Avantageusement, les câbles ont une faible section. Ils n'apportent donc qu'un très faible ombrage sur les cellules photovoltaïques, et ce d'autant mieux que les modules photovoltaïques sont disposés entre les structures.

En variante, le support peut être rigide. Il peut comporter des profilés, notamment métalliques.

Le support peut être choisi dans la liste suivante, qui n'est pas limitative : filet de bateaux catamaran, structures photovoltaïques temporaires démontables, fixations sur tentes, ballon dirigeable, module spatial.

Le support peut être dépourvu de plots en béton, qui sont remplacés par des ancrages. L'invention peut permettre d'éviter d'utiliser pour la fixation des modules photovoltaïques des plots en béton, ce qui est tout particulièrement avantageux dans les espaces agricoles, et notamment pour l'agrivoltaïsme.

### Brève description des dessins

L'invention pourra être mieux comprise à la lecture de la description détaillée qui va suivre, d'exemples de réalisation non limitatifs de celle-ci, et à l'examen du dessin annexé, sur lequel :
[Fig 1] La figure 1 est une vue de face d'un dispositif photovoltaïque conforme à l'invention.
[Fig 1a] La figure la est une vue en coupe du module photovoltaïque de la figure 1.
[Fig 1b] La figure 1b en est une vue en perspective éclatée.
[Fig 2] La figure 2 est une vue de face d'une variante de réalisation.
[Fig 3] La figure 3 est une vue de face d'une variante de réalisation.
[Fig 4] La figure 4 est une vue de face d'une variante de réalisation.
[Fig 5] La figure 5 est une vue de face d'une variante de réalisation.
[Fig 6a] La figure 6a est une vue en perspective d'une variante de réalisation.
[Fig 6b] La figure 6b est une vue de face de la variante de la figure 6a.

### Description détaillée

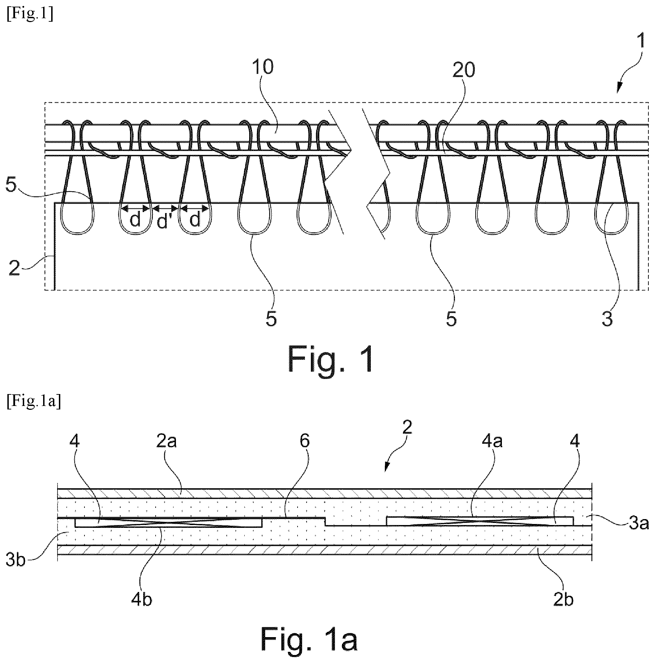

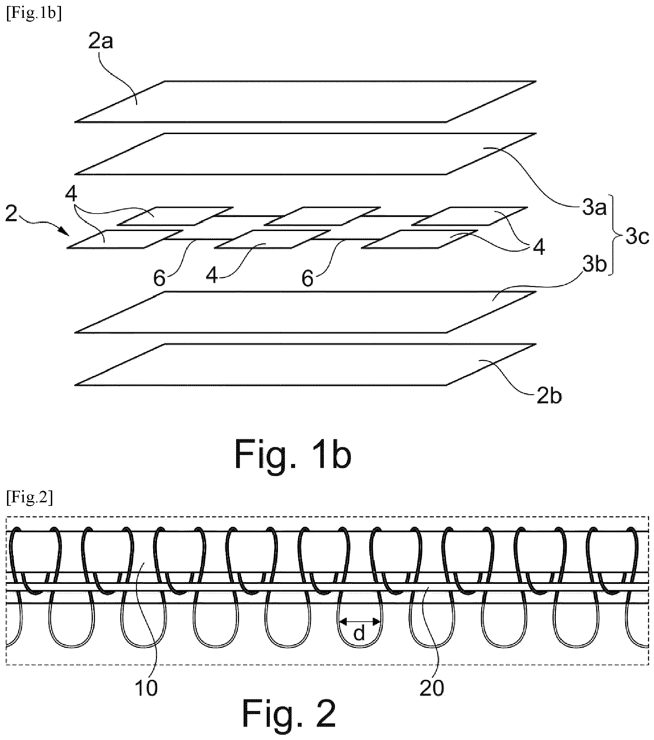

On a illustré aux figures 1, 1a et 1b un dispositif photovoltaïque 1, comportant un module photovoltaïque 2, comportant un encapsulant 3c de cellules photovoltaïques 4 disposé entre une première face 2a et une deuxième face 2b, et une pluralité d'attaches 5 pour fixer le module photovoltaïque 2 à un support 10.

Le module photovoltaïque 2 en tant que tel est illustré plus en détails aux figures la et 1b. On a ainsi représenté partiellement et schématiquement, respectivement en coupe sur la figure la et en vue éclatée sur la figure 1b, un exemple classique de module photovoltaïque 2 comportant des cellules photovoltaïques 4 cristallines.

Le module photovoltaïque 2 comporte une face avant 2a orientée vers le soleil, généralement réalisée en verre trempé transparent d'épaisseur d'environ 3 mm, et une face arrière 2b, par exemple constituée par une couche polymère, opaque ou transparente, monocouche ou multicouche.

Entre la première face 2a et la deuxième face 2b du module photovoltaïque 2 se situent les cellules photovoltaïques 4, reliées électriquement entre elles par des conducteurs de liaison 6 et intégrées ou insérées entre deux couches avant 3a et arrière 3b de matériau d'encapsulation formant toutes les deux un ensemble encapsulant 3c.

De façon habituelle, le procédé de réalisation du module photovoltaïque 2 comporte une étape dite de lamination sous vide des différentes couches décrites précédemment, à une température supérieure ou égale à 120°C, voire 140°C, voire encore 150°C, et inférieure ou égale à 170°C, typiquement comprise entre 145 et 165°C, et pendant une durée du cycle de lamination d'au moins 10 minutes, voire 15 minutes.

Pendant cette étape de lamination, les couches de matériau d'encapsulation 3a et 3b fondent et viennent englober les cellules photovoltaïques 4, en même temps que l'adhérence se crée à toutes les interfaces entre les couches, à savoir entre la face avant 2a et la couche avant de matériau d'encapsulation 3a, la couche de matériau d'encapsulation 3a et les faces avant 4a des cellules photovoltaïques 4, les faces arrière 4b des cellules photovoltaïques 4 et la couche arrière de matériau d'encapsulation 3b, et la couche arrière de matériau d'encapsulation 3b et la face arrière 2b du module photovoltaïque 1.

Selon l'invention, les attaches 5 sont réparties le long d'au moins un bord dudit module photovoltaïque, voire le long de deux bords opposés 3 dudit module photovoltaïque 2, de façon sensiblement homogène. On voit sur la figure 1 l'un des bords 3 du module photovoltaïque 2, en partie. Grâce à l'invention, les efforts sont mieux répartis sur le bord du module photovoltaïque. Les contraintes dans le module photovoltaïque sont ainsi moins importantes. Le module photovoltaïque 2 est dépourvu de cadre, notamment dépourvus de cadre en aluminium.

Les attaches 5 sont écartées d'une distance d les unes des autres qui est sensiblement toujours la même pour deux attaches 5 consécutives. Elles sont dans cet exemple écartées les unes des autres d'une distance d de 1 cm.

En outre, on voit que les attaches forment des boucles, la distance d' entre deux boucles pouvant être différente de la distance d délimitée par les deux attaches 5 d'une même boucle.

Le bord 3 du module photovoltaïque 2 comporte entre 150 et 200 attaches 5 formant des boucles pour un module d'une longueur de 1,5 à 2 mètres. Le diamètre du fil de maintien utilisé pour former les attaches 5 peut être de l'ordre de 0,6 mm.

Dans l'exemple décrit en référence à la figure 1, le module photovoltaïque 2 comporte des première et deuxième faces réalisées en verre, on parle de biverre, entourant l'encapsulant. Les attaches 5 sont de préférence incorporées dans l'encapsulant lors de l'étape de fabrication du module, par exemple lors de l'étape de lamination de celui-ci.

Par ailleurs, dans ce mode de réalisation, le support 10 comporte un câble flexible 10, représentant une fixation à un support flexible.

Dans la variante de réalisation illustré à la figure 2, les attaches 5 sont également laminées dans l'encapsulant entre des première et deuxième faces réalisées en verre, le support 10 étant dans cet exemple un tube rigide représentant une fixation à un support rigide.

Les attaches 5 sont formées à partir d'un unique fil de maintien. Ici, un seul fil de maintien est utilisé pour former toutes les attaches 5, en formant des boucles.

Dans ces deux exemples de réalisation, les attaches 5 sont fixées dans l'encapsulant. Les attaches sont obtenues en plaçant judicieusement le fil de maintien unique entre les deux films d'encapsulant avant l'étape de lamination. Le fil de maintien a une partie du fil qui forme une pluralité de boucles espacées et encapsulées et une autre partie du fil qui est libre et destinée à former les attaches.

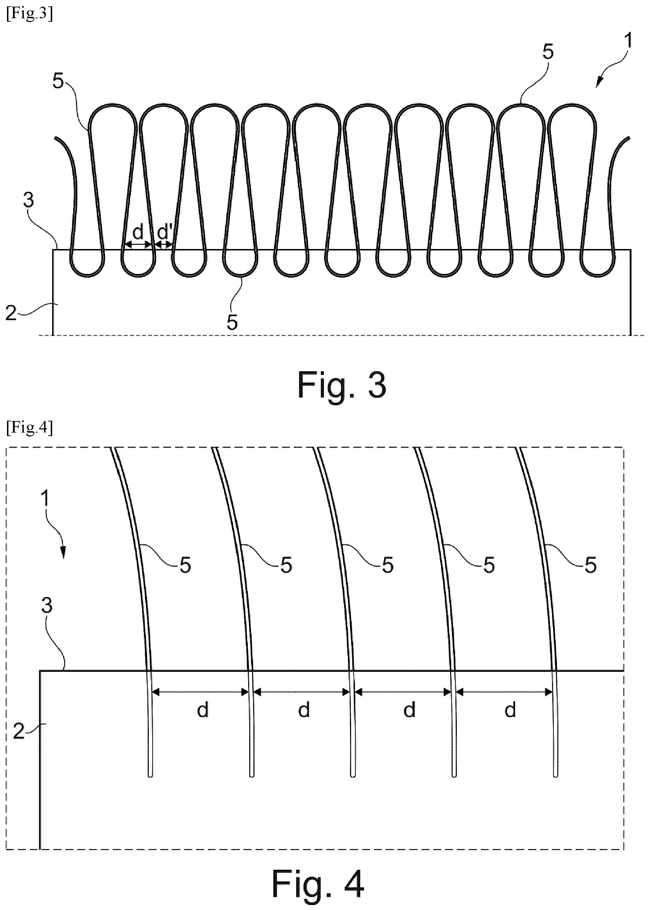

En variante, les attaches 5 d'un bord de module photovoltaïque 2 peuvent être fixées sur la première face et/ou sur la deuxième face du module photovoltaïque 2, notamment après la lamination, comme illustré à titre d'exemple à la figure 3, où le collage des attaches 5 a été réalisé à l'extérieur du module photovoltaïque 2 directement sur la face avant ou arrière.

Dans tous ces exemples de réalisation, les attaches sont disposées en formant des boucles.

En variante, les attaches 5 d'un bord de module photovoltaïque 2 peuvent être droites et s'étendre sensiblement parallèlement les unes aux autres, notamment de manière rectiligne, comme illustré à titre d'exemple à la figure 4. Elles peuvent dans ce cas être formées par une pluralité de fils de maintien distincts dont une extrémité est alors solidaire du module, par exemple en étant encapsulée au cours de l'étape de lamination ou rapportée sur l'une ou l'autre des faces, par exemple par collage.

Les attaches 5 d'un même bord d'un module photovoltaïque 2 peuvent être dans ce cas discontinu, alors qu'elles peuvent être continues lorsqu'elles forment des boucles.

Lorsque la fixation des attaches 5 est réalisée par collage, notamment sur la première face et/ou sur la deuxième face du module photovoltaïque, la colle est choisie afin que sa tenue mécanique soit suffisante pour maintenir les attaches sur le module photovoltaïque 2.

Lorsque la fixation des attaches est réalisée par incorporation à l'encapsulant, une étape complémentaire de collage peut être réalisée afin de bien boucher les pores du fil, ce qui permet d'éviter de possibles entrées d'humidité dans le fil de maintien et donc dans le module photovoltaïque. Dans ce cas, la colle utilisée doit avoir une fluidité suffisante afin de permettre sa pénétration dans le fil de maintien.

Lorsque la fixation des attaches est réalisée par collage, la fluidité de la colle doit être choisie de manière à éviter que la colle ne remonte par capillarité dans les attaches en dehors du module photovoltaïque, ce qui risque de diminuer sa capacité de collage sur le module photovoltaïque.

La fluidité de la colle utilisée peut introduire un transfert par capillarité de la colle le long du fil de maintien et modifier son comportement mécanique notamment. Afin de contrer un tel phénomène, on peut placer au préalable un point de colle fluide à quelques millimètres du bord du module photovoltaïque afin que la capillarité du fil de maintien soit stoppée.

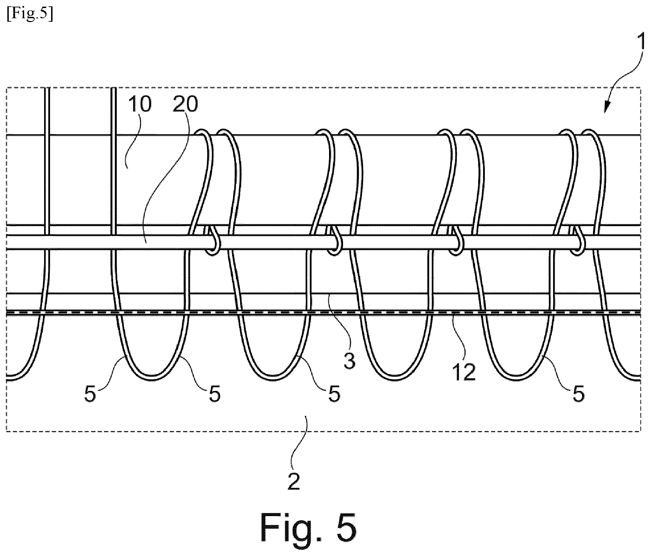

Afin de renforcer le collage, on peut utiliser une pièce de renfort 12, comme illustré à la figure 5. La pièce de renfort 12 est disposée perpendiculairement sur les attaches 5 au niveau des points de collage sur le module photovoltaïque 2. La pièce de renfort 12 comporte dans cet exemple un fil qui est collé sur les fils d'attache. La pièce de renfort 12 permet de donner plus de résistance au collage et de renforcer la colle.

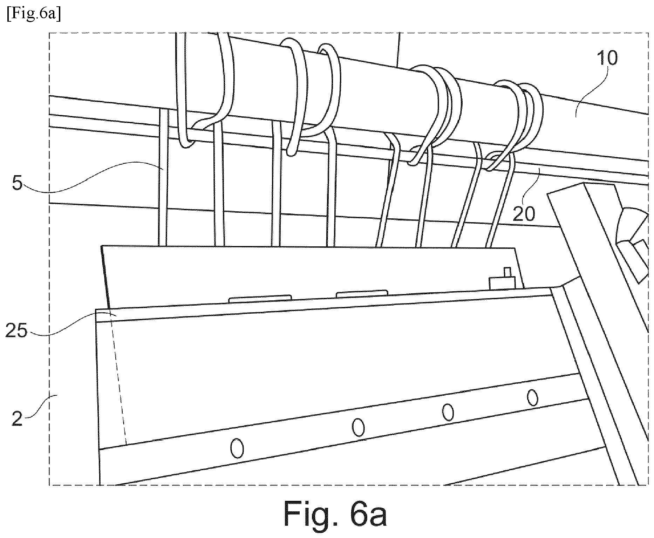

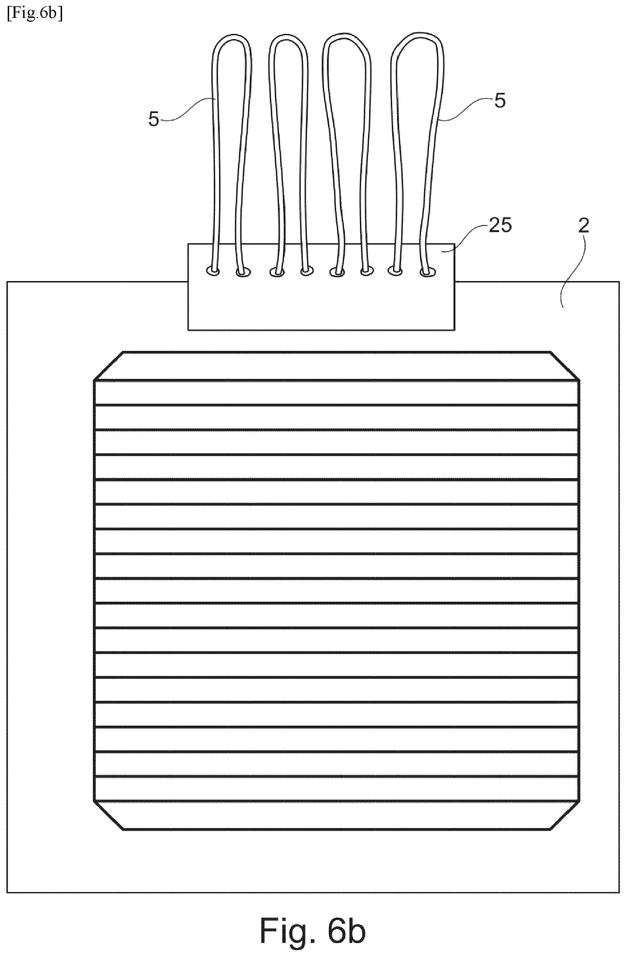

Dans une autre variante de réalisation illustrée aux figures 6a et 6b, le dispositif photovoltaïque peut comporter une pièce de liaison 25 entre le module photovoltaïque et la pluralité d'attaches 5. Dans ce cas, la pièce de liaison 25 est solidaire du module photovoltaïque et les attaches 5 sont fixées à la pièce de liaison 25.

Par ailleurs, on voit sur toutes les figures que le module photovoltaïque 2 est attaché au support 10 avec un écartement non nul, d'environ 10 mm. Un tel écartement est occupé par les attaches 5 s'étendant entre le ou les modules photovoltaïques et le support.

Les attaches 5 peuvent être fixées au support 10 selon différent moyens. A titre d'exemple, on a illustré sur toutes les figures une fixation par des noeuds en tête d'alouette avec un dispositif d'accroche 20 en forme de barre.

Bien entendu, on ne sort pas du cadre de la présente invention si la fixation est faite par d'autres moyens, tels que par exemple noeuds, boucle dans lesquelles passe au moins une partie du support 10, utilisation d'une pièce de jonction entre le fil d'attache et le support, telle que par exemple un crochet ou un autre fil de jonction, cette liste n'étant pas limitative.

## Revendications

1. Dispositif photovoltaïque (1), comportant :
- un ou plusieurs modules photovoltaïques (2), comportant chacun une première face (2a) et une deuxième face (2b) entourant un encapsulant de cellules photovoltaïques, et
- une pluralité d'attaches (5) pour fixer au moins un module photovoltaïque (2) à un support (10), les attaches (5) étant réparties le long d'au moins un bord dudit module photovoltaïque, voire le long d'au moins deux bords opposés dudit module photovoltaïque (2),
les attaches (5) étant fixées le long d'au moins un bord de la première face et/ou de la deuxième face du module photovoltaïque (2) par collage.

2. Dispositif photovoltaïque selon la revendication précédente, les attaches (5) étant réparties de façon homogène le long d'au moins un bord du module photovoltaïque (2), notamment d'au moins deux bords opposés dudit module photovoltaïque (2).

3. Dispositif photovoltaïque selon la revendication 1, les attaches (5) étant réparties de façon non homogène le long d'au moins un bord du module photovoltaïque (2), notamment d'au moins deux bords opposés dudit module photovoltaïque (2).

4. Dispositif photovoltaïque selon l'une quelconque des revendications précédentes, un bord du module photovoltaïque comportant un seul fil de maintien, lequel est utilisé pour former toutes les attaches, notamment en formant des boucles.

5. Dispositif photovoltaïque selon l'une quelconque des revendications 1 à 3, un bord du module photovoltaïque comportant une pluralité de fils de maintien, lesquels forment chacun une ou des attaches.

6. Dispositif photovoltaïque selon l'une des deux revendications précédentes, un diamètre d'un fil de maintien étant supérieur ou égal à 0,15 mm, mieux supérieur ou égal à 0,6 mm, voire supérieur ou égale à 1 mm.

7. Dispositif photovoltaïque selon l'une quelconque des revendications précédentes, les attaches (5) étant fixées dans l'encapsulant.

8. Dispositif photovoltaïque selon l'une quelconque des revendications précédentes, le bord ou les deux bords opposés présentent au moins une arête arrondie, notamment par polissage ou une arête abattue ou un bord rodé.

9. Dispositif photovoltaïque selon l'une quelconque des revendications précédentes, comportant une pièce de renfort disposée perpendiculairement sur les attaches au niveau des points de collage sur le module photovoltaïque, notamment une pièce de renfort souple ou rigide.

10. Dispositif photovoltaïque selon la revendication précédente, la pièce de renfort comportant une arête arrondie, notamment par polissage, ou une arête abattue ou un bord rodé.

11. Dispositif photovoltaïque selon l'une quelconque des revendications 1 à 6 ou 9 à 11, comportant une pièce de liaison entre le module photovoltaïque et la pluralité d'attaches, la pièce de liaison étant solidaire du module photovoltaïque et les attaches étant fixées à la pièce de liaison.

12. Dispositif photovoltaïque selon l'une quelconque des revendications précédentes, comportant une ou des calles disposées entre le ou les modules photovoltaïques (2) et le support (10) pour empêcher leur rapprochement.

13. Ensemble comportant un dispositif photovoltaïque (1) selon l'une quelconque des revendications précédentes, et un support (10) auquel sont rattachés les modules photovoltaïques (2).

14. Ensemble selon la revendication précédente 12, le support (10) étant flexible, le support (10) comportant notamment des câbles, notamment deux câbles parallèles l'un à l'autre, par exemple des câbles passant sur les côtés du ou des modules photovoltaïques (2).
